Europäisches Patentamt

European Patent Office

Office européen des brevets

(19)

(11) Veröffentlichungsnummer: **0 340 338 B1**

(12) **EUROPÄISCHE PATENTSCHRIFT**

(45) Veröffentlichungstag der Patentschrift:
17.07.91 Patentblatt 91/29

(51) Int. Cl.$^5$: **F16L 25/00**

(21) Anmeldenummer: **88117725.7**

(22) Anmeldetag: **25.10.88**

(54) **Rohrverbindung.**

(30) Priorität: **08.04.88 CH 1299/88**

(43) Veröffentlichungstag der Anmeldung:
**08.11.89 Patentblatt 89/45**

(45) Bekanntmachung des Hinweises auf die
Patenterteilung:
**17.07.91 Patentblatt 91/29**

(84) Benannte Vertragsstaaten:
**AT CH DE ES FR GB IT LI**

(56) Entgegenhaltungen:
**EP-A- 0 061 531
EP-A- 0 087 702
DE-C- 3 626 289
FR-A- 2 037 666**

(73) Patentinhaber: **Giesserei Emmenbrücke AG
CH-6020 Emmenbrücke (CH)**

(72) Erfinder: **Geiger, Werner
Lerchenfeldstrasse 26
CH-6045 Meggen (CH)**

(74) Vertreter: **Reichmuth, Hugo Werner
INVENTIO AG Seestrasse 55
CH-6052 Hergiswil/NW (CH)**

EP 0 340 338 B1

## Beschreibung

Die Erfindung betrifft eine Rohrverbindung zwischen zwei stumpf aneinandergestossenen Rohrenden, mit mindestens einem auf die Rohrenden aufgeschobenen ringförmigen Halteteil mit einer Dichtungskammer, mit einer den Verbindungsstoss der Rohrenden umschliessenden, einen härteren Auflagering aufweisenden, ringförmigen, elastomeren Dichtung und je einer Klemmkammer pro Rohrende, mit mindestens einem auf jedes Rohrende aufgeschobenen, mindestens eine innere Klemmkante aufweisenden Klemmelement.

Mit der europäischen Patentanmeldung 0 087 702 ist eine solche Rohrverbindung bekanntgeworden, bei welcher auf jedes Rohrende je zwei Flanschen bildende Halteteile aufgeschoben sind. Die beiden mittleren Halteteile weisen je eine gegeneinandergerichtete Aussparung auf und bilden je eine Hälfte einer im Querschnitt trapezförmigen Dichtungskammer, wobei die längere Parallele des Trapezes an der Rohraussenfläche aufliegt. Die beiden Kammerhälften bzw. die beiden mittleren Halteteile werden durch Inbusschrauben gegeneinandergezogen und die in die Dichtungskammer eingelegte, über den Verbindungsstoss geschobene Dichtung in die Aussparung gepresst. Durch die Formgebung der Dichtungskammer und der Dichtung wird die Dichtung dabei mit einer Kraft beaufschlagt, welche sowohl axial als auch radial nach innen gerichtet ist und die beiden Rohrenden abdichtet. Die beiden äusseren Halteteile weisen ebenfalls je eine gegeneinandergerichtete, die Klemmkammern bildende Aussparung auf, in welche je zwei als Klemmelement wirkende konische Stahl-Spannscheiben eingelegt sind. Sie werden mit zusätzlichen, längeren Schrauben ebenfalls in der Achsrichtung der Rohre gegeneinandergezogen und gegen die dazwischen liegenden mittleren Halteteile verspannt. Durch die Verformung der Spannscheiben entsteht sowohl eine kraftschlüssige als auch eine formschlüssige Verbindung zwischen den Halteteilen und den Rohrenden, welche eine Längsverschiebung der Dichtung verhindert.

Der Nachteil dieser Rohrverbindung liegt darin, dass bei einer eventuellen Undichtigkeit der komplett zusammengebauten Rohrverbindung ein weiteres Nachspannen unmöglich ist. Ein weiterer Nachteil liegt noch darin, dass für die Dichtung der Rohrverbindung und für die unverschiebbare Halterung der Rohrverbindung auf den beiden Rohrenden zwei voneinander unabhängige, gegeneinander verspannbare Flanschpaare erforderlich sind. Zudem kann das Flanschpaar für die Halterung der Rohrdichtung erst dann zusammengeschoben und gegeneinander verspannt werden, wenn das Flanschpaar für die Dichtung über der Stossstelle komplett zusammengezogen ist.

Der Erfindung liegt die Aufgabe zugrunde, eine möglichst kompakte Rohrverbindung vorzuschlagen, bei welcher ein Nachspannen der Dichtungselemente möglich ist, und bei welcher sowohl die Dichtung der Stossstelle als auch die Halterung der Dichtung auf der Stossstelle gleichzeitig erfolgt.

Diese Aufgabe wird durch die im Anspruch 1 gekennzeichnete Erfindung gelöst.

Die durch die Erfindung erreichten Vorteile sind im wesentlichen darin zu sehen, dass das Nachspannen der Dichtung der Rohrverbindung bei einer eventuellen Undichtigkeit stets möglich ist, dass komplett zusammengebaute Rohrverbindungen, statt viele Einzelteile, lagerbar und einbaubar sind, und dass mit dem Anziehen der radial angeordneten Druckschrauben gleichzeitig die Stossstelle der beiden Rohrenden abgedichtet und die Rohrverbindung auf den Rohrenden unverschiebbar gehaltert ist.

Auf den beiliegenden Zeichnungen ist ein Ausführungsbeispiel der Erfindung dargestellt, das im folgenden näher erläutert wird. Es zeigen :

Fig. 1     eine Teilansicht mit einem Längsschnitt einer zusammengebauten Rohrverbindung und

Fig. 2     einen Querschnitt durch eine auf einem Rohrende aufgesetzten, teilweise festgezogenen Rohrverbindung.

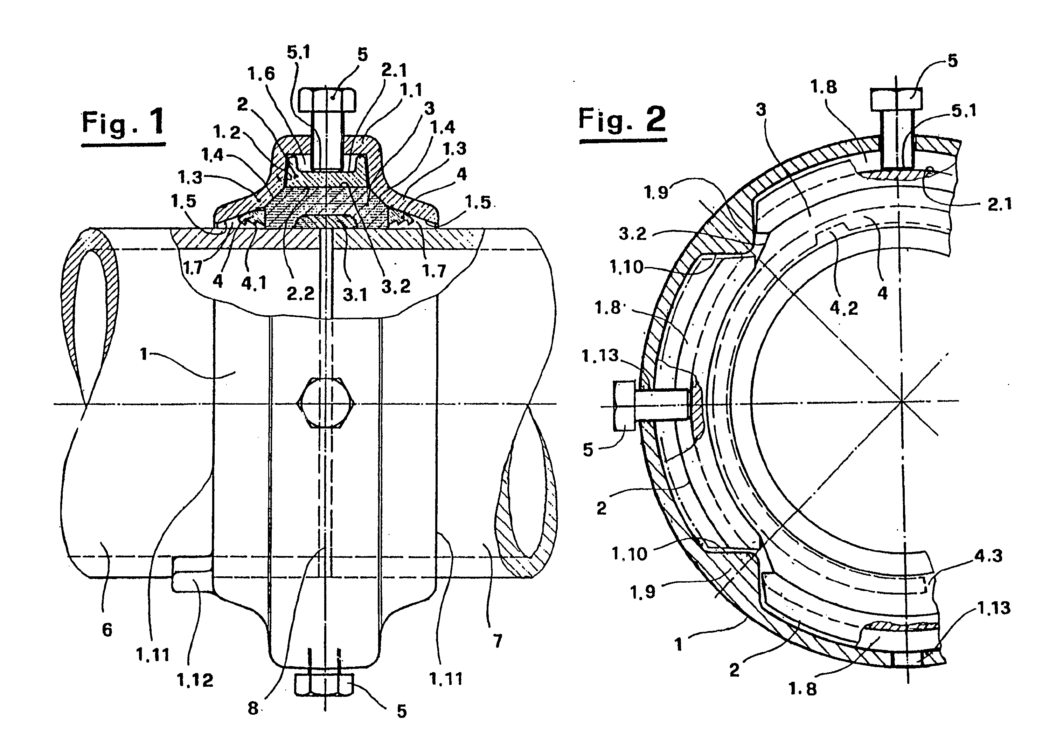

In den Fig. 1 und 2 ist mit 1 ein als ringförmiges Gussgehäuse ausgebildeter Halteteil bezeichnet, welcher einen U-förmigen Querschnitt mit aussenliegendem Steg 1.1 mit einer inneren Längs-Führungsbahn 1.2 und zwei konisch nach aussen und gegen die Rohroberfläche verlaufende Flanschen 1.3 mit je einem steilen Innenkonus 1.4 und je einem flachen Innenkonus 1.5 aufweist. Die Längsführungsbahn 1.2 und die beiden steilen Innenkonen 1.4 bilden eine Dichtungskammer 1.6 und nehmen eine Dichtung 3 und in gleiche Teile unterteilte Drucksegmente 2 auf. Die Dichtungskammer 1.6 wird durch quer angeordnete innere Verstärkungsrippen 1.9 in gleich grosse Drucksegmentkammern 1.8 unterteilt. Die Seitenflächen 1.10 von zwei benachbarten Verstärkungsrippen 1.9 sind parallel zur radialen Verschieberichtung des zugehörigen, in der Drucksegmentkammer 1.8 gelagerten Drucksegmentes 2 angeordnet und dienen als stirnseitige Führung für das Drucksegment 2. Am Umfang des Halteteiles, beispielsweise in der Mitte jeder Drucksegmentkammer 1.8 ist ein radial angeordnetes Gewindeloch 1.13 vorgesehen, welches eine Druckschraube 5 aufnimmt. Die Druckschraube 5 ist im Gewindeloch 1.13 in radialer Richtung verschiebbar und wirkt mit dem Gewindeende 5.1 auf die Aussenfläche 2.1 des zugehörigen Drucksegmentes 2. Das Drucksegment 2 liegt mit seiner Innenfläche 2.2 an der Aussenfläche 3.2 der Dichtung 3 auf, wobei der ganze Umfang der Dichtung 3 im dargestellten Beispiel durch vier Drucksegmente 2 abgedeckt ist. Die Dichtung 3 besteht aus einem elastomeren Material mit einem integrierten härteren Auflagering 3.1. Je ein Freiraum zwischen den Stirnseiten der in den Halteteil 1 eingelegten Dichtung 3 und den flachen Innenkonen 1.5 des Halteteils 1 bilden die Klemmkammern 1.7. In der Klemmkammer 1.7 ist je ein Klemmelement 4 eingelegt, welches als aufgetrennter Klemmring mit einem radialen Schlitz 4.3 und beispielsweise einer die Biegung des Klemmringes erleichternden Kerbe 4.2 und drei Klemmkanten 4.1 ausgebildet ist. Die Rohrverbindung mit den seitlichen Aussenkanten 1.11 verbindet zwei mit einer Stossstelle 8 stumpf aneinandergestossene Rohre 6, 7 fest miteinander. Mindestens auf einer Seite der Rohrverbindung stehen entweder ein breiter oder zwei distanzierte schmale, an die Rundung der Rohre 6, 7 angepasste Traglappen 1.12 gegenüber der Aussenkante 1.11 vor und dienen als Montagehilfe für die Aufnahme eines Rohres oder eines Rohr-Einsatzstückes.

Für die Lagerhaltung werden die Rohrverbindungen komplett zusammengebaut. Die vier Drucksegmente 2 werden in die vier Drucksegmentkammern 1.8 der Dichtungskammer 1.6 des Halteteils 1 eingelegt und die ringförmige Dichtung 3 in die Dichtungskammer 1.6 des Halteteils 1 eingedrückt. Dadurch wird jedes Drucksegment 2, welches durch die Längsführung 1.2 und die Seitenflächen 1.10 der Verstärkungsrippen 1.9 in der Drucksegmentkammer 1.8 für eine radiale Bewegung geführt ist, in einer Ruhelage gehalten. In die beiden Klemmkammern 1.7 neben den Stirnseiten der Dichtung 2 werden die Klemmelemente 4 eingelegt, indem sie schräg in die Bohrung des Halteteils 1 eingeführt und zusammengedrückt werden, bis sie in die Klemmkammer 1.7 einspringen. Die vier Druckschrauben 5 werden lose in die Gewindelöcher 1.13 des Halteteiles 1 eingeschraubt. Beim Stossen von zwei Rohren 6, 7 wird eine zusammengebaute Rohrverbindung auf ein Ende eines Rohres 6, 7 aufgeschoben, wobei der oder die Traglappen 1.12 auf der vom Rohr 7 abgewendeten Seite der Rohrverbindung angeordnet sind. Die Rohrverbindung wird so weit auf das erste Rohr aufgeschoben, bis die Aussenkante 1.11 des Halteteiles 1 bündig mit dem Rohrende ist. Das Ende des Anschlussrohres 6 wird nun an das erste Rohr 7 angestossen und auf die Traglappen 1.12 aufgelegt, wobei das Anschlussrohr 6 zum ersten Rohr 7 genau zentriert ist. Die Rohrverbindung wird über das Ende des zweiten Rohres 6 geschoben, bis beide Aussenkanten 1.11 je auf gleicher Höhe mit einem entsprechenden, am Ende jeden Rohres vor dem Zusammenbau angebrachten Riss übereinstimmen, welcher einen dem Ausdehnungskoeffizienten des Rohrmateriales entsprechenden Abstand der Stossstelle 8 berücksichtigt. Die vier Druckschrauben 5 werden nun abwechslungsweise festgezogen, derart, dass die Drucksegmente 2 gleichmässig auf die Aussenfläche 3.2 der Dichtung 3 gepresst werden. Die Dichtung 3 wird dabei mit dem härteren Auflagering 3.1 an die Stossstelle 8 gepresst und durch das Ausweichen des zusammengepressten Materials gegen die Klemmkammern 1.7 hin werden die beiden Klemmelemente 4 in der Achsrichtung der Rohrleitung an den flachen Innenkonus 1.5 gedrückt, wobei die Klemmelemente 4 mit ihren Klemmkanten 4.1 an die Oberfläche der beiden Rohrenden gepresst werden. Einerseits wird dadurch die Stossstelle abgedichtet, anderseits wird die Rohrverbindung unverschiebbar mit den beiden Rohrenden verbunden.

Die erfindungsgemässe Rohrverbindung ist auch für Reparaturen vorgesehen. Es kann vorkommen, dass ein defektes Rohrstück einer Rohrleitung ersetzt werden muss. Zu diesem Zweck wird die defekte Stelle aus der Rohrleitung entfernt, d.h. eine bestimmte Länge des Rohres wird von der Rohrleitung abgetrennt und ein gleiches, neues Rohrstück wird vorbereitet. Auf jedes Rohrende der verlegten Rohrleitung wird eine erfindungsgemässe Rohrverbindung aufgeschoben, wobei die Aussenkante 1.11 der Rohrverbindung bündig zum zugehörigen Rohrende steht und die vorstehenden Traglappen 1.12 der Rohrverbindung gegeneinandergerichtet auf der unteren Seite der Rohrleitung liegen. Das neue zugeschnittene Rohrstück, auf welchem an beiden Enden die endgültige Lage der Rohrverbindung durch einen Riss gekennzeichnet ist, wird nun an beiden Enden auf die vorstehenden Traglappen der Rohrverbindung aufgelegt. Das eingesetzte Rohrstück ist genau zentriert, fluchtet zu der verlegten Rohrleitung und beide Rohrverbindungen können auf die Rohrenden des eingesetzten Rohrstückes bis an den markierten Riss zurückgeschoben und wie oben beschrieben festgezogen werden.

Im beschriebenen und dargestellten Ausführungsbeispiel sind vier gleiche Drucksegmente vorgesehen, welche durch je eine in der Mitte angreifende Druckschraube radial auf die ganze Aussenfläche der Dichtung drücken. Es wäre ohne weiteres möglich, auch drei, fünf oder mehr gleiche Drucksegmente vorzusehen, wobei anstelle einer Druckschraube auch beispielsweise zwei gleichmässig distanzierte Druckschrauben pro Drucksegment vorgesehen werden könnten.

Ebenso wäre es ohne weiteres möglich anstelle eines einteiligen Klemmelementes mit Kerben und radialem Schlitz, ein aus mehreren gleichen Klemmsegmenten bestehendes Klemmelement einzusetzen.

## Patentansprüche

1. Rohrverbindung zwischen zwei stumpf aneinandergestossenen Rohrenden, mit mindestens einem auf die Rohrenden aufgeschobenen ringförmigen Halteteil (1) mit einer Dichtungskammer (1.6), mit einer den Verbindungsstoss (8) der Rohrenden umschliessenden, einen härteren Auflagering (3.1) aufweisenden, ringförmigen, elastomeren Dichtung (3) und je einer Klemmkammer (1.7) pro Rohrende, mit mindestens einem auf jedes Rohrende aufgeschobenen, mindestens eine innere Klemmkante (4.1) aufweisenden Klemmelement (4), dadurch gekennzeichnet, dass an einem einzigen eine Dichtungskammer (1.6) und zwei Klemmkammern (1.7) aufweisenden Halteteil (1) eine radial auf die Aussenfläche (3.1) der Dichtung (3) wirkende Spannvorrichtung (2, 5) angeordnet ist, und dass in der Klemmkammer (1.7) ein durch die Spannvorrichtung (2, 5) über die auf die Dichtung (3) ausgeübte Achsialkraft betätigtes und durch einen flachen Innenkonus (1.3) der Klemmkammer (1.7) mit den Klemmkanten (4.1) an die Oberfläche des Rohres (6, 7) drückbares Klemmelement (4) angeordnet ist.

2. Rohrverbindung nach Anspruch 1, **dadurch gekennzeichnet**, dass die Spannvorrichtung in einer Längsführungsbahn (1.2) der Dichtungskammer (1.6) des Halteteiles (1) geführte, auf der Aussenfläche (3.2) der Dichtung (3) aufliegende Drucksegmente (2) und am Halteteil (1) pro Drucksegment (2) mindestens eine radial verschiebbare, auf die Aussenfläche (2.1) des Drucksegmentes (2) wirkende Druckschraube (5) aufweist.

3. Rohrverbindung nach Anspruch 1, **dadurch gekennzeichnet**, dass in der Dichtkammer (1.1) des Halteteiles (1) die Drucksegmente (2) stirnseitig führende, die Dichtungskammer (1.6) in Drucksegmentkammern (1.8) unterteilende Verstärkungsrippen (1.9) angeordnet sind.

4. Rohrverbindung nach Anspruch 3, **dadurch gekennzeichnet**, dass zwei benachbarte Verstärkungsrippen (1.9) gegenüberliegende, parallel zur Bewegungsrichtung der Drucksegemente (2) verlaufende Seitenflächen (1.10) aufweisen.

5. Rohrverbindung nach Anspruch 1, **dadurch gekennzeichnet**, dass das Klemmelement (4) mindestens eine die Auflage der Klemmkanten (4.1) auf der Rohroberfläche erleichternde Kerbe (4.2) und einen radialen Schlitz (4.3) aufweist.

6. Rohrverbindung nach Anspruch 1, **dadurch gekennzeichnet**, dass der Halteteil (1) mindestens ein, mindestens auf einer Seite des Halteteiles (1) angeordneter, gegenüber der Aussenkante (1.11) vorstehender, ein Ende eines Rohres (6) zentrierend aufnehmender Traglappen (1.12) aufweist.

## Claims

1. Pipe connection between two butt-jointed pipe ends with at least one annular retaining part (1) pushed onto the pipe ends, with a sealing chamber (1.6), with an annular elastomeric seal (3) displaying a harder bearing ring (3.1) and enclosing the butt location (8) and with a respective clamping chamber (1.7) for each pipe end, with a clamping element (4), which displays at least one inner clamping edge (4.1) and is pushed onto each pipe end, characterised thereby, that a tightening device (2, 5), which acts radially on the outer surface (3.1) of the seal (3), is arranged at a single retaining part (1) displaying a sealing chamber (1.6) and two clamping chambers (1.7) and that a clamping element (4), which is urgeable with the clamping edges (4.1) against the surface of the piple (6, 7) through a flat internal cone (1.3) of the clmaping chamber (1.7) and actuated through the tightening device (2, 5) by way of axial force exerted on the seal (3), is arranged in the clamping chamber (1.7).

2. Pipe connection according to claim 1, characterised thereby, that the tightening device displays pressure segments (2), which lie on the outer surface (3.2) of the seal (3) and are guided in a longitudinal guide track (1.2) of the sealing chamber (1.6) of the retaining part (1), and at least one radially displaceable pressure screw (2), which acts on the outer surface (2.1) of the pressure segment (2), for each pressure segment (2) at the retaining part (1).

3. Pipe connection according to claim 1, characterised thereby, that re-inforcing ribs (1.9), which subdivide the sealing chamber (1.6) into pressure segment chambers (1.8) and guide the pressure segments (2) at the end face, are arranged in the sealing chamber (1.1) of the retaining part (1).

4. Pipe connection according to claim 3, characterised thereby, that two adjacent re-inforcing rubs (1.9) display mutually opposite side surfaces (1.10) extending parallelly to the direction of movement of the pressure segments (2).

5. Pipe connection according to claim 1, characterised thereby, that the clamping element (4) displays a radial slot (4.3) and at least one notch (4.2), which facilitates the bearing of the clamping edges (4.1) on the pipe surface.

6. Pipe connection according to claim 1, characterised thereby, that the retaining part (1) displays at least one carrier lobe (1.12), which is arranged on at least one side of the retaining part (1), protrudes relative to the outer edge (1.11) and centringly receivesone end of a pipe (6).

## Revendications

1. Raccord pour tuyaux disposé entre deux extrémités de tuyaux placés en aboutement et comportant au moins une pièce annulaire de retenue (1) emmanchée sur les extrémités des tuyaux et possédant une chambre d'étanchéité (1.6), un élément d'étanchéité annulaire élastomère (3), qui entoure la zone d'aboutement (8) des extrémités des tuyaux et possède une bague d'appui plus dure (3.1), et respectivement une chambre de serrage (1.7) pour chaque extrémité de tuyau, au moins un élément de serrage (4) emmanché sur chaque extrémité de tuyau et possédant au moins un bord interne de serrage (4.1), caractérisé en ce que sur une pièce unique de retenue (1) possédant une chambre d'étanchéité (1.6) et deux chambres de serrage (1.7) est disposé un dispositif de serrage (2, 5) agissant radialement sur la surface extérieure (3.1) de l'élément d'étanchéité (3), et en ce que dans la chambre de serrage (1.7) est disposé un élément de serrage (4), actionné par l'intermédiaire de la force axiale exercée sur l'élément d'étanchéité (3), et peut être repoussé par les bords de serrage (4.1) contre la surface du tube (6,7) par un cône intérieur aplati (1.5) de la chambre de serrage (1.7).

2. Raccord pour tuyaux selon la revendication 1, caractérisé en ce que le dispositif de serrage comporte des segments de compression (2), qui sont guidés dans un rail de guidage longitudinal (1.2) de la chambre d'étanchéité (1.6) de la pièce de retenue (1) et s'appliquent sur la surface supérieure (3.2) de l'élément d'étanchéité (3), et au moins une vis de compression (5), qui est déplaçable radialement et agit sur la surface extérieure (2.1) du segment de compression (2), sur la pièce de retenue (1), pour chaque segment de compression (2).

3. Raccord pour tuyaux selon la revendication 1, caractérisé en ce que des nervures de renforcement (1.9), qui guident frontalement les segments de compression (2) et subdivisent la chambre de compression (1.1) en des chambres (1.8) logeant les segments de compression, sont disposées dans la chambre d'étanchéité (1.6) de la pièce de retenue (1).

4. Raccord pour tuyaux selon la revendication 3, caractérisé par le fait que deux nervures de renforcement (1.9) voisines possèdent des surfaces latérales opposées (1.8), qui s'étendent parallèlement à la direction de déplacement des segments de compression (2).

5. Raccord pour tuyaux selon la revendication 1, caractérisé en ce que l'élément de serrage (4) possède au moins une encoche (4.2), qui facilite la mise en place des bords de serrage (4.1) sur la surface des tuyaux, et une fente radiale (4.3).

6. Raccord pour tuyaux selon la revendication 1, caractérisé en ce que la pièce de retenue (1) possède au moins une languette de support (1.12), qui est disposée au moins d'un côté de la pièce de retenue (1), fait saillie par rapport au bord extérieur (1.11) et reçoit avec un effet de centrage une extrémité d'un tuyau (6).

Fig. 1

Fig. 2